# NEUE EUROPÄISCHE PATENTSCHRIFT

(11) **EP 2 378 866 B2**
(45) Veröffentlichungstag und Bekanntmachung des Hinweises auf die Entscheidung über den Einspruch: **25.03.2020**
(45) Hinweis auf die Patenterteilung: 15.04.2015
(21) Anmeldenummer: 10711034.8
(22) Anmeldetag: 15.03.2010
(51) Int. Cl.: A01M 21/04, E01H 11/00

(54) **Thermisches Vegetationskontrollverfahren sowie -einrichtung zur thermischen Vegetationskontrolle**
Thermal vegetation control method and device for thermal vegetation control
Procédé de contrôle thermique de la végétation et dispositif de contrôle thermique de la végétation

(30) Priorität: 16.03.2009 DE 202009001969 U
(43) Veröffentlichungstag der Anmeldung: 26.10.2011
(73) Patentinhaber: IproTech GmbH, 58636 Iserlohn (DE)
(72) Erfinder: GIERSCH, Torsten, 58675 Hemer (DE); SCHNEEGAß, Willi, 58644 Iserlohn (DE)
(74) Vertreter: Haverkamp, Jens
(86) Internationale Anmeldenummer: PCT/EP2010/053302
(87) Internationale Veröffentlichungsnummer: WO 2010/106024

(56) Entgegenhaltungen:
- EP-A1- 1 588 615
- GB-A- 2 306 151
- JP-A- 7 274 798
- NL-C2- 1 018 458
- US-A1- 2005 223 638

## Beschreibung

Die Erfindung betrifft ein thermisches Vegetationskontrollverfahren von in wasserdurchlässigen Bodenschichten wachsenden Pflanzen, bei dem ein für die Zwecke des Verfahrens erwärmtes, flüssiges Medium als Wärmeträger auf die zu kontrollierende Vegetation appliziert wird. Ferner betrifft die Erfindung eine Einrichtung zur thermischen Vegetationskontrolle, umfassend eine Applikationsvorrichtung mit wenigstens einer Ausgabe zum Ausgeben eines Wärmeträgers und mit wenigstens einer Ausgabe zum Ausgeben von Schaum zum Ausbilden einer temporären thermischen Isolierung, wobei die Schaumausgabe zu der Wärmeträgerausgabe dergestalt angeordnet ist, dass in Arbeitsrichtung der Applikationsvorrichtung der ausgegebene Schaum über den ausgegebenen Wärmeträger gelegt wird.

Zur Vegetationskontrolle, auch als Unkrautbekämpfung angesprochen, werden unterschiedliche Verfahren eingesetzt werden. Diese unterscheiden sich hinsichtlich ihres zum Abtöten der Pflanzen verwendeten Wirkmittels. Bekannt sind chemische Verfahren, bei denen eine Abtötung der Pflanzen durch Einsatz eines Herbizids erfolgt. Da ein Einsatz von Herbizid durch die damit unter Umständen einhergehende Belastung der Umwelt nicht immer gewünscht oder auch möglich ist, werden neben chemischen Verfahren auch manuelle oder thermische Verfahren zur Vegetationskontrolle eingesetzt. Bei mechanischen Verfahren werden die zu entfernenden Pflanzen mechanisch zerstört. Diese Verfahren lassen sich grundsätzlich nur auf befestigten Oberflächen einsetzen. Bei thermischen Verfahren erfolgt eine Unkrautbekämpfung durch thermische Zerstörung der zu beseitigenden Pflanzen. Thermisch kann eine Vegetationskontrolle beispielsweise durch Abflämmen der Pflanzen erfolgen. Gemäß einem weiteren thermischen Vegetationskontrollverfahren wird ein auf über 90° Celsius erwärmtes flüssiges Medium, insbesondere Wasser in Form von Heißdampf oder in Form eines Sprühstrahls mit fein verteilten Wassertröpfchen auf die zu kontrollierende Vegetation appliziert. Diese Verfahren zielen darauf ab, die Kutikula und die Meristeme (Vegetationspunkte) der oberirdischen Pflanzenteile zu zerstören, sodass die Pflanze infolge dessen verwelkt und abstirbt. Um möglichst viele Vegetationspunkte der zu kontrollierenden Vegetation mit dem Wärmeträger zu erreichen, wird bei diesem ein erwärmtes flüssiges Medium als Wärmeträger verwendenden Vegetationskontrollverfahren dieser in Form von Dampf oder zerstäubt appliziert. Typischerweise erfolgt die Ausgabe des Wärmeträgers innerhalb einer Haube, um die Wärme länger im Bereich der zu zerstörenden Pflanzenteile halten zu könnten, was beinhaltet, dass die Haube Sorge dafür trägt, dass sich der applizierte Heißdampf nicht verflüchtigt.

Aus US 5,433,758 A ist ein Verfahren bekannt, bei dem nach Applizieren des Heißdampfes eine temporäre Schaumschicht über die dampfbehandelten Pflanzen gelegt wird. Die Schaumschicht dient zum Bereitstellen einer thermischen Isolation mit dem Zweck, die durch den Dampf an die Pflanzen gebrachte Wärme länger an den Pflanzen halten zu können. Der Schaum selbst besteht vorzugsweise aus einem biologisch abbaubaren Stoff oder Stoffgemisch. Ausgegeben werden gemäß diesem vorbekannten Verfahren der Heißdampf und die temporäre Schaumschicht unter einer Applikationshaube. Diese dient, wie bereits vorstehend angedeutet, zum Erhöhen der Temperaturhaltezeit. Innerhalb der Applikationshaube ist in Arbeitsrichtung derselben zunächst eine Heißdampfsprüheinrichtung zum Applizieren des Abtötungsmediums - in kleine fein verteilte Tröpfen (Spray oder Dampf) gebrachtes Heißwasser (Heißwasser in disseminierter Form) als Wärmeträger - angeordnet ist. In Arbeitsrichtung der Haube dieser Wärmeträgerausgabe nachgeschaltet ist eine Schaumausgabe. Der aus der Schaumausgabe ausgegebene Schaum dient zum Umhüllen der zuvor mit dem Heißwasserdampf behandelten Pflanzen, um den Abkühlvorgang zu verlangsamen. Bei diesem Verfahren ist es erforderlich, die mit dem in disseminierter Form applizierten Wärmeträger behandelten Pflanzen für eine möglichst wirksame thermische Isolierung einzuhüllen. Die Schaumapplikation ist somit entsprechend sorgfältig durchzuführen.

Während bei dem vorbeschriebenen Verfahren die Applikation des eigentlichen Abtötungsmittels und des zur thermischen Isolierung eingesetzten Schaumes zeitlich nacheinander und damit zweistufig vorgenommen wird, wird in WO 03/026414 A1 die Applikation eines wässrigen Heißschaumes vorgeschlagen. Bei diesem Verfahren wird ein einen hohen Wassergehalt aufweisender Schaum erzeugt, der auf die zu kontrollierende Vegetation ausgebracht wird. Die wässrigen Bestandteile des Schaumes sind dabei der Wärmeträger. Auch bei diesem Verfahren ist es erforderlich, Sorge dafür zu tragen, dass die abzutötenden Pflanzen von dem Schaum eingehüllt sind, um einen möglichst großen Anteil der oberirdischen Pflanzenteile abzutöten. Aufgrund der aufgeschäumten Konsistenz des Wärmeträgers wirkt der Heißschaum vornehmlich an denjenigen Stellen der Pflanze, an denen ein wässriger Schaumbestandteil und nicht etwa eine Luftblase an der Pflanze anliegt.

Die thermischen Vegetationskontrollverfahren sind in Bezug auf eine Umweltgefährdung aufgrund der verwendeten Stoffe unbedenklich, weshalb diese Verfahren, wenn möglich, bevorzugt eingesetzt werden. Um ein bestimmungsgemäßes Ergebnis zu erzielen, ist es bei den vorbeschriebenen thermischen Verfahren jedoch oftmals notwendig, die abzutötenden Pflanzen mehrfach einer solchen Behandlung zu unterziehen.

EP 1 588 615 A1 offenbart ein Verfahren zur Kontrolle von Unkraut auf einer Bodenoberfläche, wobei eine heiße Flüssigkeit in einer im Wesentlichen drucklosen Weise auf Pflanzen aufgebracht wird. Dieses erfolgt, nachdem diese über ein automatisches Erkennungsverfahren auf der Bodenoberfläche erkannt worden sind.

NL 1 018 458 C2 beschreibt eine Vorgehensweise und eine Anlage zur Bekämpfung von Vegetation, wobei Wasser bei einer relativ hohen Temperatur auf die Vegetation gesprüht wird. Zu diesem Zweck umfasst die Anlage eine Hochdruckpumpe und eine Sprühanlage. Das Wasser selbst wird auf bis zu 140° Celsius erhitzt. Der Mindestdruck ist mit 5 bis 25 bar, der Höchstdruck mit 350 bar angegeben. Über die mit Wasser besprühte Vegetation wird eine Schaumschicht aufgetragen.

Ausgehend von diesem diskutiertem Stand der Technik liegt der Erfindung die Aufgabe zugrunde, ein eingangs genanntes Verfahren sowie eine eingangs genannte Einrichtung dergestalt zu verbessern, dass eine wirksamere und nachhaltigere Vegetationskontrolle möglich ist.

Gelöst wird diese Aufgabe erfindungsgemäß durch ein Verfahren mit den Merkmalen des Anspruchs 1.

Ferner wird diese Aufgabe erfindungsgemäß durch eine eingangs genannte, gattungsgemäße Einrichtung mit den Merkmalen des Anspruchs 6 gelöst.

Aufgrund der Konzeption dieses Verfahrens - gleiches gilt für die beanspruchte Einrichtung - erfolgt eine Applikation des als Abtötungsmittel dienenden Wärmeträgers nicht in Form kleiner, fein verteilter (disseminierter) Tröpfchenform als Spray oder Dampf, sondern in nicht disseminierter und damit in gebundener, zumindest weitgehend gebundener Form, das heißt: Der Wärmeträger, wobei als Wärmeträger vorzugsweise Wasser eingesetzt werden wird, wird in Form eines gebundenen, zumindest weitgehend gebundenen Strahls appliziert. Der Wärmeträger läuft bei diesem Verfahren drucklos oder im Wesentlichen drucklos aus einer Applikationsvorrichtung, beispielsweise einer Applikationslanze für die Zwecke der Vegetationskontrolle aus. Da der Wärmeträger aus einer Applikationsvorrichtung ausfließt, kann bei einer solchen Applikation auch von einer Schwallapplikation gesprochen werden. Zu diesem Zweck ist die Applikationsvorrichtung an eine mit dem flüssigen Wärmeträger beaufschlagbare Leitung angeschlossen. Als Wärmeträgerflüssigkeit wird typischerweise Heißwasser eingesetzt, welches üblicherweise mit einer nur wenige Grade unterhalb seiner Siedetemperatur befindlichen Temperatur ausgegeben wird. Die Ausgabe des Abtötungsmittels (des Wärmeträgers) in Form eines gebundenen, zumindest weitgehend gebundenen Strahls hat zum Vorteil, dass dieses aufgrund der relativ kleineren äußeren Oberfläche des flüssigen Wärmeträgers bezogen auf das ausgegebene Volumen dieser weniger rasch abkühlt, verglichen mit einer Ausgabe eines zur Abtötung dienenden Wärmeträgers in Form kleiner disseminierter Tropfen als Sprüh-oder Dampfstrahl. In Folge dessen wird der zu behandelnden Vegetation entsprechend mehr Wärme zugeführt.

Im Unterschied zu vorbekannten thermischen Vegetationskontrollverfahren steht bei diesem Vegetationskontrollverfahren im Vordergrund, die Wärmeträgerflüssigkeit vor allem auch an unterirdische Pflanzenteile, beispielsweise dem Wurzelhals oder die Wurzeln selbst zu bringen, zumindest dann, wenn die Pflanzen in einem versickerungsfähigen Boden wurzeln oder sich zumindest deren Wurzelhals in einem solchen Boden befindet. Bei der Applikation lässt es sich nicht vermeiden, dass auch die oberirdischen Bestandteile der Pflanze in Kontakt mit der Wärmeträgerflüssigkeit kommen und in Folge dessen auch diese Teile zumindest teilweise abgetötet werden. Aufgrund der schwallartigen Ausgabe der Wärmeträgerflüssigkeit sickert das Heißwasser in das Erdreich ein und gelangt an den Wurzelhals und unter Umständen an die Wurzeln der Pflanzen. Eine Zerstörung der Vegetationspunkte im Wurzelhals oder auch in den Pflanzenwurzeln zerstört die Pflanze insgesamt und vor allem nachhaltiger, verglichen mit einer Zerstörung nur der oberirdischen Pflanzenteile. Daher ist die Wirksamkeit einer Vegetationskontrolle gegenüber vorbekannten Einrichtungen und Verfahren verbessert. Überdies werden aufgrund des effektiven Einbringens hinreichender Wärme in die oberste Bodenschicht darin befindliche Samen ebenfalls abgetötet. Mit vorbekannten Verfahren waren diese thermisch nicht oder zumindest nicht hinreichend erreichbar. Bei dem Verfahren und gleichermaßen bei der beanspruchten Einrichtung macht man sich den Umstand zu Nutze, dass unterirdische Pflanzenteile bereits bei Temperaturen von über 40° Celsius abgetötet werden, wenn diese Temperatur über eine gewisse Zeit aufrechterhalten wird. Begünstigt wird ein Wärmeeintrag in das die unterirdischen Pflanzenteile aufnehmende Erdreich durch die schlechte Wärmeleitfähigkeit eines solchen Bodens, insbesondere wenn dieser, wie unter einer Wegeoberfläche üblich, als relativ poröse Sandschicht, und zwar als Frostschutzschicht ausgeführt ist.

Um möglichst viel Wärme an die Pflanzenwurzeln zu bringen, wird man das ausfließende Heißwasser mit einer möglichst hohen Temperatur ausfließen lassen, wobei die Ausfließtemperatur des flüssigen Wärmeträgers geringfügig unter seiner Siedetemperatur liegt. Ein Applizieren des Wärmeträgers mit einer am Auslauf oberhalb seiner Siedetemperatur befindlichen Temperatur hat zur Folge, dass der ausfließende Wärmeträgerstrahl aufgrund des Siedeeffektes nicht vollständig gebunden ist. Ein Ausfließen des Wärmeträgers in einer solchen Art oder in einer mit dieser Art vergleichbaren Art ist im Rahmen dieser Ausführungen als zumindest weitgehend gebundener Strahl zu verstehen. Hierdurch werden die Abtötungsergebnisse nicht nachteilig beeinträchtigt.

Versuche haben gezeigt, dass gute Abtötungsergebnisse bereits erzielt werden können, wenn die ausfließende Heißwassertemperatur 80° C bis 85 °C beträgt. Vorzugsweise liegt die Ausflusstemperatur des Heißwassers jedoch zwischen 90 und 99 °C. Einfluss auf die notwendige Temperatur des ausfließenden Wärmeträgers haben auch die aktuellen Umgebungstemperaturen und damit die Bodentemperatur sowie der Feuchtigkeitsgehalt des Bodens.

Damit das ausgegebene Heißwasser als Wärmeträger zum Abtöten der Pflanzen in den Boden eindringen kann, um die mit dem Heißwasser transportierte Wärme an Pflanzenhälse oder die Pflanzenwurzeln zu bringen, sollte der Boden nicht wassergesättigt sein. Vielmehr ist es vorteilhaft, wenn der Boden relativ trocken ist. Insbesondere bei trockenem Boden kann bereits mit einer relativ kleinen Wassermenge hinreichend Wärme an die Pflanzenhälse und/oder die Pflanzenwurzeln gebracht werden. Ausgenutzt werden bei dem beschriebenen Wärmeeintrag in den Boden die relativ schlechten wärmeleitenden Eigenschaften des Bodens, mit dem Ergebnis, dass das Wasser entsprechend langsamer abkühlt. Dieses begünstigt den gewünschten Wärmeeintrag an die Pflanzenwurzeln.

Vor dem Hintergrund, dass bei dem beschriebenen Verfahren darauf abgezielt wird, flüssigen Wärmeträger in den Boden einzubringen, ist es grundsätzlich nicht erforderlich, dass die Applikation des Wärmeträgers unterhalb einer Applikationshaube erfolgt.

Ferner ist vorgesehen, zur thermischen Isolierung über den ausgegebenen Wärmeträger einen temporären Schaumteppich zu legen. Hierdurch wird die durch den ausgeflossenen Wärmeträger an die Pflanze, insbesondere deren Wurzelhälse und Wurzeln transportierte Wärme länger vor Ort auf einem die Pflanze schädigenden bzw. zerstörenden Temperaturniveau gehalten. Der aufgebrachte Schaumteppich ist vorzugsweise dergestalt eingestellt, dass dieser biologisch abbaubar ist und sich nach einigen Minuten zersetzt. Aufgrund der besseren thermischen Isolierungseigenschatten werden bevorzugt trockene Schäume mit einem Luftanteil von mehr als 80 % eingesetzt. Bei dem beschriebenen Verfahren braucht der Schaum lediglich über die mit dem Wärmeträger behandelte Fläche gelegt zu werden. Die Wirksamkeit dieses thermischen Vegetationskontrollverfahrens wird nicht beeinträchtigt, wenn der Schaum die oberirdischen Pflanzenteile im Unterschied zu vorbekannten Verfahren nicht vollständig einhüllt.

Als Applikationsvorrichtung dient eine manuell handhabbare Lanze mit einer Doppelmündung, wobei aus der einen Mündung das heiße Wasser als Wärmeträger ausfließt und aus der anderen, unmittelbar daran angrenzenden Mündung der Schaum ausgegeben wird. Beide Mündungen sind erfindungsgemäß als Schlitze ausgeführt, wobei die Längserstreckung der Schlitze die Applikationsbreite der Lanze bestimmt.

Weitere Vorteile und Ausgestaltungen der Erfindung ergeben sich aus der nachfolgenden Beschreibung der Erfindung anhand eines Ausführungsbeispiels unter Bezugnahme auf die beigefügten Figuren. Es zeigen:
- **Fig. 1:**: Ein schematisiertes Blockschaltbild einer Einrichtung zur thermischen Vegetationskontrolle, umfassend eine Applikationslanze,
- **Fig. 2:**: In einem schematisierten Längsschnitt die Applikationslanze der Einrichtung der Figur 1,
- **Fig. 3:**: Einen schematisierten Ausschnitt eines mit Platten befestigten Weges vor einer thermischen Vegetationskontrolle und
- **Fig. 4:**: Der in Figur 3 gezeigte Weg während einer thermischen Vegetationskontrolle.

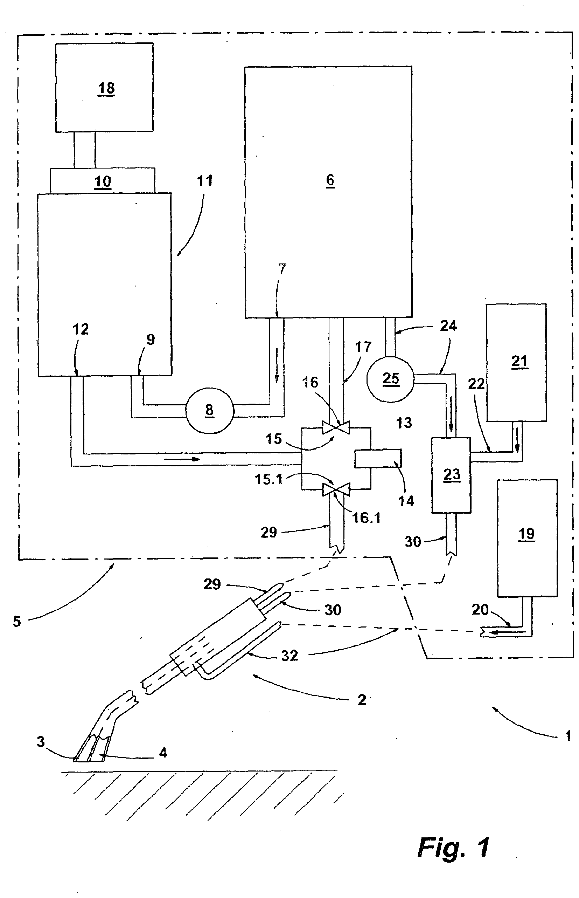

Eine Einrichtung 1 zur thermischen Vegetationskontrolle umfasst als Applikationsvorrichtung eine manuell handhabbare Applikationslanze 2. Diese dient zum Ausgeben von Heißwasser als flüssigem Wärmeträger sowie zum Ausgeben eines Schaums zum Ausbilden eines Schaumteppichs. Schematisiert ist in Figur 1 die Heißwasserausgabe der Lanze 2 mit dem Bezugszeichen 3 und die Schaumausgabe mit dem Bezugszeichen 4 bezeichnet. Die Applikationslanze 2 ist über Schläuche mit den übrigen Aggregaten der Einrichtung 1 verbunden. Somit ist es möglich, mit Ausnahme der Applikationslanze 2 sämtliche Aggregate zusammengefasst in einem Modul 5 anzuordnen, von dem ausgehend mit der Lanze 2 gearbeitet werden kann. Das Modul 5 kann beispielsweise auf einem Kraftfahrzeug oder einem Anhänger angeordnet sein.

Dieses Modul 5 der Einrichtung 1 umfasst einen Wasserbehälter 6 zum Bevorraten des für die Applikation benötigten Wassers. Der Ausgang 7 des Behälters 6 ist unter Zwischenschaltung einer Pumpe 8 an den Eingang 9 einer mit einem Brenner 10 betriebenen Heizeinrichtung angeschlossen. Der Ausgang 12 der als Durchlauferhitzer konzipierten Heizeinrichtung 11, aus der das erwärmte Wasser austritt, beaufschlagt bei dem dargestellten Ausführungsbeispiel eine Ventileinheit 13. Die Ventileinheit 13 verfügt über einen Temperatursensor 14, mit dem die Temperatur des aus dem Ausgang 12 der Heizeinrichtung 11 anströmenden Wassers gemessen wird. Die Ventileinheit 13 ist als 3/2-Wege-Ventil konzipiert und verfügt über zwei Ausgänge 15, 15.1 mit jeweils einem Auf-Zu-Ventil 16, 16.1. In Abhängigkeit davon, ob das die Ventileinheit 13 beaufschlagende Heißwasser die gewünschte Ausgabetemperatur bzw. eine höhere Temperatur oder eine niedrigere Temperatur aufweist, ist entweder das Ventil 16 oder das Ventil 16.1 offen-geschaltet. Weist die die Ventileinheit 13 anströmende Heißwassertemperatur noch nicht die gewünschte Ausgabetemperatur auf, ist das Ventil 16.1 geschlossen und das dem Ausgang 15 zugeordnete Ventil 16 geöffnet, so dass das erwärmte Wasser über eine Rückflussleitung 17 in den Behälter 6 gefördert wird. Auf diese Weise ist es möglich, das in dem Behälter 6 bevorratete Wasser, welches sich zunächst auf Zapftemperatur oder Umgebungstemperatur befindet, zu erwärmen. Wird durch den Temperatursensor 14 dagegen festgestellt, dass das die Ventileinheit 13 beaufschlagende Heißwasser die Ausgabetemperatur aufweist oder da drüber liegt, wird das Ventil 16 geschlossen und das dem Ausgang 15.1 zugeordnete Ventil 16.1 geöffnet, so dass das Heißwasser über die Warmwasserausgabe 3 der Lanze 2 ausfließen kann.

Der Brenner 10 wird mit Dieselkraftstoff betrieben. Aus diesem Grunde ist Teil des Moduls 5 ein den benötigten Dieselkraftstoff bevorratender Dieseltank 18.

Für die Schaumbildung verfügt das Modul 5 über einen Kompressor 19 zum Bereitstellen von Druckluft. Der Kompressor 19 ist über eine Druckluftleitung 20 und einen Schlauch mit der Lanze 2 verbunden. Die zugeführte Druckluft wird innerhalb der Lanze 2 mit dem Schaummittel zum Aufblasen desselben zum Erzeugen des gewünschten Schaums vermengt. In einem Behälter 21 des Moduls 5 ist zu diesem Zweck ein flüssiges Schaumkönzentrat bevorratet. Bei dem Schaumkonzentrat handelt es sich vorzugsweise um ein solches, welches in kurzer Zeit biologisch abbaubar ist. Von dem Schaumkonzentratbehälter 21 führt eine Leitung 22 zu einer Dosiereinrichtung 23. In der Dosiereinrichtung 23 wird das Schaumkonzentrat mit Wasser vermengt, das über eine Leitung 24 mittels einer in die Leitung 24 eingeschalteten Pumpe 25 von dem Wasserbehälter 6 aus der Dosiereinrichtung 23 zugeführt wird. Bei der Dosiereinrichtung 23 kann es sich beispielsweise um eine solche handeln, bei der das Schaumkonzentrat durch ein Venturi-Prinzip in das geförderte Wasser selbsttätig eingezogen wird. Der Ausgang der Dosiereinrichtung 23 ist mit der Applikationslanze 2 verbunden.

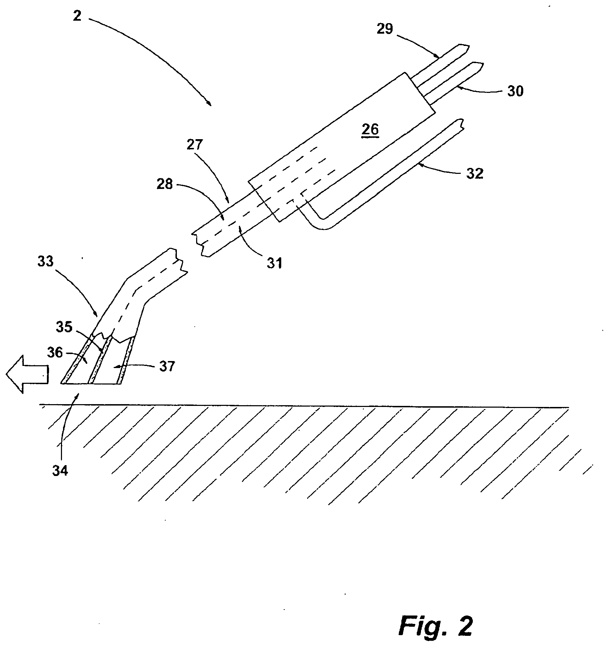

Die Applikationslanze 2 ist in Figur 2 schematisiert vergrößert dargestellt. Diese verfügt über einen Griff 26 mit daran angeordneten Stellelementen zum Einstellen des gewünschten Ausgabemediums. Diese sind der Einfachheit halber in der Figur nicht gezeigt. Der Griff 26 umschließt ein Doppelrohr 27, wobei der eine Kanal des Doppelrohres 27 mittels eines Schlauches an den Ausgang des Ventils 16.1 der Ventileinheit 13 angeschlossen ist. Bei der Darstellung der Figur 2 handelt es sich hierbei um den obenliegende Kanal 28 des Doppelrohres 27. Der die Lanze 2 mit dem Ventil 16.1 verbindende Schlauch trägt das Bezugszeichen 29. Über einen weiteren Schlauch 30 ist der andere Kanal 31 mit dem Ausgang der Dosiereinrichtung 23 verbunden. Über eine weitere flexible Leitung 32 ist die Applikationslanze 2 an die Druckluftleitung 20 angeschlossen. Im Bereich des Griffes 26 wird in den durch den Schlauch 30 beaufschlagten Kanal 31 des Doppelrohres 27 Druckluft zugeführt bei dem dargestellten Ausführungsbeispiels wird somit die zugeführte Schaumflüssigkeit erst innerhalb der Applikationslanze 2 durch die Zufuhr der Druckluft aufgeschäumt. Der Abschnitt des Doppelrohres 27 von der Mündung der Druckluft in den Kanal 32 bis zum Ende des Kanals 31 dient zur Schaumentspannung. Somit wird die zugeführte Schaumflüssigkeit erst in diesem Kanal zur Aufschäumung gebracht.

Das Doppelrohr 27 geht über in einen bei dem dargestellten Ausführungsbeispiel schnabelartig konzipierten Ausgabekopf 33. Der Ausgabekopf 33 ist zum Teil im Schnitt dargestellt, woraus erkennbar ist, dass die Trennung zwischen dem in dem Kanal 28 des Doppelrohrs 27 zugeführten Heißwasser und dem in dem Kanal 31 transportierten Schaum bis zur unteren Mündung 34 des Ausgabekopfes 33 durch eine Trennwand 35 erhalten bleibt und daher die gewünschte Nacheinanderausgabe von zunächst dem Heißwasser als Wärmeträger und anschließend dem Schaum für die vorgesehene thermische Isolierung bis zur eigentlichen Ausgabe aus dem Ausgabekopf 33 getrennt bleiben.

Die Arbeitsrichtung der Lanze 2 ist durch einen Blockpfeil in Figur 2 kenntlich gemacht. Wird die Lanze in dieser Richtung bewegt, fließt aus dem durch den Heißwasser führenden Kanal 28 beaufschlagten Ausgabekanal 36 als Wärmeträgerausgabe Heißwasser mit einer Temperatur, die wenige Grade weniger als die Siedetemperatur beträgt, aus. Bei dem dargestellten Ausführungsbeispiel ist die Ventileinheit 13 dergestalt eingestellt, dass das Ventil 16.1 öffnet, wenn die die Ventileinheit 13 anströmende Heißwassertemperatur zumindest 93 Grad Celsius beträgt. Das austretende Heißwasser benetzt die darunter befindlichen Pflanzen und sickert in den Boden ein mit dem Zweck, die mit dem Wasser transportierte Wärme an die Wurzeln der abzutötenden Pflanzen zu bringen. Zeitgleich mit der Heißwasserausgabe wird durch den durch die Trennwand 35 abgetrennten, weiteren Ausgabekanal 37 als Schaumausgabe ein trockener Schaum ausgegeben, der in Folge der Bewegung der Applikationslanze 2 in der gezeigten Richtung unmittelbar nach Ausgabe des Heißwassers über die mit dem Wasser befeuchteten Bodenbereiche gelegt wird, wodurch diese sodann thermisch isoliert sind. Bei der vorbeschriebenen Applikation ist vorgesehen, dass sich das ausfließende Heißwasser nicht mit dem darüber gelegten Schaum vermischt, auch wenn eine Vermischung im Grenzbereich nicht völlig ausgeschlossen werden kann.

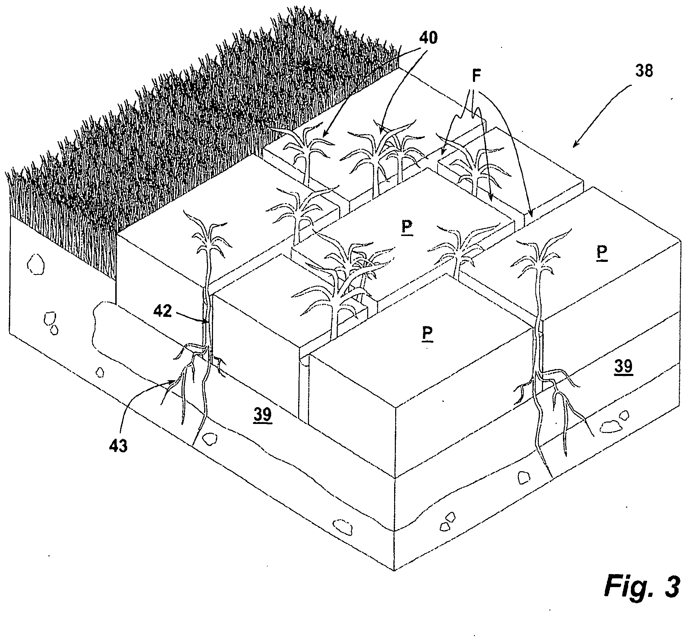

Figur 3 zeigt beispielhaft einen mit Platten P befestigten Weg 38. Die Platten P sind, wie üblich, durch Fugen F voneinander getrennt und liegen auf einer Sandschüttung 39 als Frostschutzschicht auf. Die Fugen F sind ebenfalls mit dem Material der Sandschüttung 39 gefüllt. Das die Fugen füllende Sandmaterial und die Sandschüttung 39 sind, um der gewünschten Eigenschaft als Frostschutzschicht zu genügen, wasserdurchlässig. Oberflächlich über die Fugen F eintretendes Wasser versickert somit durch die Sandschüttung in das darunter befindliche Erdreich.

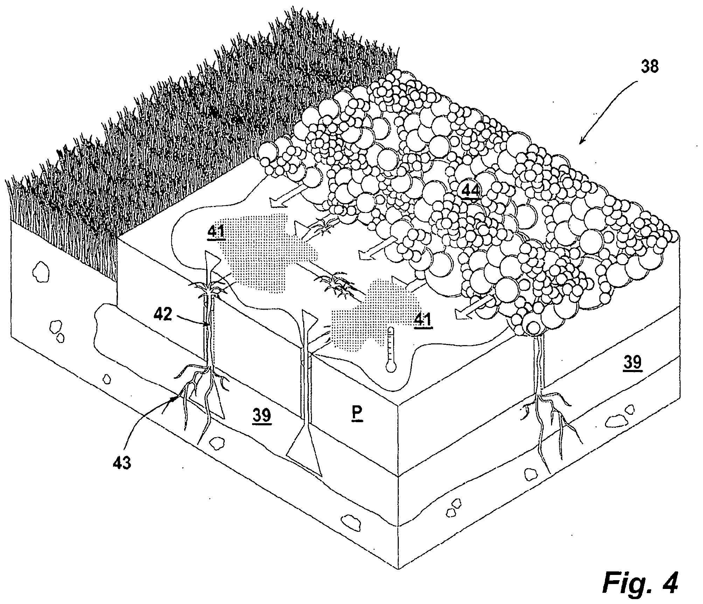

Das in den Fugen F befindliche Material der Sandschüttung 39 dient einigen, schematisiert in Figur 3 eingezeichneten Pflanzen 40 als Boden, weshalb die oberirdischen Teile der Pflanzen 40 aus den Fugen F herauswachsen. Diese Pflanzen 40 gilt es zu kontrollieren, das heißt: Am Wachstum zu hindern und somit zu zerstören. Zu diesem Zweck wird der Weg 38 mit der vorbeschriebenen thermischen Vegetationskontrolleinrichtung behandelt bzw. dem vorbeschriebenen Verfahren zur thermischen Vegetationskontrolle unterworfen. Schematisiert ist das thermische Vegetationskontrollverfahren in Figur 4 gezeigt, und zwar der Einfachheit halber ohne die Vegetationskontrolleinrichtung 1. Die Arbeitsrichtung erfolgt bei dem dargestellten Ausführungsbeispiel von links nach rechts. In dieser Arbeitsrichtung wird auf den Weg 38 zunächst mit der Applikationslanze 2 Heißwasser, der als gebundener Strahl aus der Ausgabe 36 der Applikationslanze 2 ausfließt, aufgebracht. Das ausgebrachte, als Wärmeträger dienende Heißwasser ist in Figur 4 mit dem Bezugszeichen 41 gekennzeichnet. Zur Symbolisierung, dass es sich bei dem ausgegebenen Wasser um Heißwasser handelt, ist in dieses ein Thermometer eingezeichnet. Das ausgegebene Heißwasser 41 dringt in die Fugen F ein und versickert in diesen, wie dieses in Figur 4 schematisiert durch die zueinander weisenden Dreiecke kenntlich gemacht ist. Damit wird das Heißwasser 41 den Wurzelhälsen und den Wurzeln 43 zugeführt. Ausgenutzt wird bei diesem Verfahren, dass das ausgegebene Heißwasser 41 nur durch die Fugen F und die darin enthaltene Fugenfüllung und nicht durch die Platten P versickern kann. Damit wird der Großteil des ausgegebenen Heißwassers 41 und damit ein Großteil der ausgegebenen Wärmemenge in die Fugen F eingebracht. Innerhalb der Fugen F kommt das Heißwasser 41 in Kontakt mit den Wurzelhälsen 42. Dieses Heißwasser 41 und das nachversickernde Heißwasser 41 gewährleisten, dass die Wurzelhälse 42 hinreichend lange auf einem Temperaturniveau gehalten werden, dass die Pflanze in diesem Bereich abstirbt. Eine Zerstörung der Pflanze im Bereich des Wurzelhalses ist wesentlich nachhaltiger als lediglich eine Zerstörung der oberirdischen Pflanzenteile. Das ausgegebene Heißwasser 41 versickert durch die Fugen und tritt in die Sandschüttung 39 ein und gelangt in dieser in Kontakt an die Wurzeln 43. Typischerweise weist das ausgegebene Heißwasser beim Versickern in die Sandschüttung 39 noch ein hinreichendes Temperaturniveau auf, um wirksam auch Wurzeln der Pflanze thermisch zerstören zu können. Die wirksame Pflanzenabtötung ist unter Bezug auf Figur 4 lediglich schematisiert erläutert worden. Es versteht sich, dass eine wirksame Pflanzenabtötung insbesondere dann gewährleistet ist, wenn, wie dieses bei zahlreichen Pflanzen der Fall sein dürfte, diese bereits in der Fugenfüllung wurzeln.

Aus der vorstehenden Beschreibung wird deutlich, dass bei der Applikation des Wärmeträgers auf die zu zerstörenden Pflanzen Versickerungswegsamkeiten der Plattenbefestigung ausgenutzt werden, damit die applizierte Wärme - das Abtötungsmittel - an diejenigen Stellen der Befestigung gebracht wird, in denen die Pflanzen wachsen, hier: Die Fugen bzw. die Fugenfüllungen. Aufgrund der relativ geringen Oberfläche des ausgegebenen Strahls gegenüber einer Dampf- oder Sprühapplikation ist der Wärmeverlust vergleichsweise gering.

Die Beschreibung des Applizierens des Heißwassers als gebundener Strahl als Wärmeträger und das damit verbundene Eindringen desselben in den Boden, in dem die Pflanzen wachsen, begründet die Effektivität dieses Verfahrens. Zur Verbesserung des Verfahrens ist es erfindungsgemäß zweckdienlich, wie zuvor beschrieben, nach Ausgabe des Wärmeträgers diesen bzw. die damit behandelte Fläche mit einem Schaumteppich zu bedecken, wie dieses auch in Figur 4 gezeigt ist. Der Schaumteppich ist in Figur 4 mit dem Bezugszeichen 44 kenntlich gemacht. Die hierzu angegebenen Pfeile symbolisieren die Arbeitsrichtung der Applikationslanze 2. Durch den Schaumteppich 44 wird ein Abgeben von Wärme aus dem applizierten Heißwasser 41 an die Luft erheblich beeinträchtigt, sodass noch ein größerer Anteil der applizierten Wärme in die Fugen F und damit an die unterirdischen Pflanzenteile gebracht wird. Lediglich der Darstellung halber ist in Figur 4 der Abstand zwischen der Heißwasserapplikation und dem Schaumteppich relativ groß bemessen. Tatsächlich wird der Schaumteppich 44, wie aus der Beschreibung der Applikationslanze 2 deutlich geworden ist, unmittelbar auf den ausgeflossenen Wärmeträger aufgebracht.

Durch die an dem Griff 26 angeordneten Armaturen kann mit der beschriebenen Einrichtung entweder alleinig eine Heißwasserapplikation oder alleinig eine Schaumapplikation durchgeführt werden, wenn eine kombinierte Ausgabe, wie vorstehend beschrieben, nicht gewünscht wird.

Die Verbindungsleitungen zwischen der Applikationslanze 2 und dem Modul 5 können aneinandergrenzend geführt sein, damit auf diese Weise über die Strömungsstrecke das in dem Schlauch 30 geförderte Schaummittel auf dem Weg zur Lanze 2 hin von dem in dem Schlauch 29 geförderten Heißwasser erwärmt wird.

Das Modul 5 kann beispielsweise auf einem Anhänger oder der Ladefläche eines Nutzfahrzeuges angeordnet sein. Ebenfalls ist es möglich, die Aggregate auf einem Tankfahrzeug anzuordnen, in dessen Tank das für den Betrieb der Einrichtung notwendige Wasser bevorratet ist. Je nach Ausgestaltung der Einrichtung kann diese, wie in dem Ausführungsbeispiel erläutert, über eine Warmwasserrückführung in den Wasserbehälter verfügen. Dieses ist nicht unbedingt erforderlich. Wird das Wasser in dem Wasserbehälter, wie beschrieben, erwärmt, hat dies zur Folge, dass dann auch das für die Schaumbereitung eingesetzte Wasser erwärmt aus dem Behälter abgezogen wird. Folglich ist dann ebenfalls der ausgegebene Schaum erwärmt, wodurch seine Isolationseigenschaften verbessert sind. Überdies wird in einem solchen Fall zusätzliche, die Pflanzen zerstörende Wärme auf den oberirdischen Teil der Pflanzen gebracht.

Die Beschreibung des Ausführungsbeispiels der Erfindung macht deutlich, dass sich die Erfindung auch auf andere, für einen Fachmann sich ohne Weiteres erschließende Art und Weise verwirklicht werden kann, ohne den Inhalt der Ansprüche zu verlassen und ohne dass dieses im einzelnen näher dargelegt werden müsste.

**Bezugszeichenliste**

| | | | |
|---|---|---|---|
| 1 | Vegetationskontrolleinrichtung | 31 | Kanal |
| 2 | Appl ikationslanze | 32 | flexible Leitung |
| 3 | Heißwasserausgabe | 33 | Ausgabekopf |
| 4 | Schaumausgabe | 34 | Mündung |
| 5 | Modul | 35 | Wand |
| 6 | Wasserbehälter | 36 | Ausgabekanal |
| 7 | Ausgang | 37 | Ausgabekanal |
| 8 | Pumpe | 38 | Weg |
| 9 | Eingang | 39 | Sandschüttung |
| 10 | Brenner | 40 | Pflanze |
| 11 | Heizeinrichtung | 41 | Heißwasser |
| 12 | Ausgang | 42 | Wurzelhals |
| 13 | Ventileinheit | 43 | Wurzel |
| 14 | Temperatursensor | 44 | Schaumteppich |
| 15, 15.1 | Ausgang | F | Fuge |
| 16, 16.1 | Ventil | P | Platte |
| 17 | Rückflussleitung | | |
| 18 | Dieseltank | | |
| 19 | Kompressor | | |
| 20 | Druckluftleitung | | |
| 21 | Behälter | | |
| 22 | Leitung | | |
| 23 | Dosiereinrichtung | | |
| 24 | Leitung | | |
| 25 | Pumpe | | |
| 26 | Griff | | |
| 27 | Doppelrohr | | |
| 28 | Kanal | | |
| 29 | Schlauch | | |
| 30 | Schlauch | | |

## Patentansprüche

1. Thermisches Vegetationskontrollverfahren zur Vegetationskontrolle von in wasserdurchlässigen Bodenschichten wachsenden Pflanzen, bei dem ein für die Zwecke des Verfahrens erwärmtes, flüssiges Medium (41) als Wärmeträger auf die zu kontrollierende Vegetation (40) appliziert wird, **dadurch gekennzeichnet, dass** der Wärmeträger als Flüssigkeit (41) in Form eines gebundenen, zumindest weitgehend gebundenen Strahls und damit in nicht disseminierter oder im Wesentlichen nicht disseminierter Form aus einer Applikationsvorrichtung (2) mit einer als Schlitz ausgeführten Mündung drucklos oder im Wesentlichen drucklos auslaufend appliziert wird, damit zumindest ein Teil des erwärmten Wärmeträgers (41) in die Bodenschicht eindringt, wobei der applizierte Wärmeträger (41) mit einer temporären thermischen Isolierung bedeckt wird, die als Schaumteppich ausgebildet ist und aus einer anderen, unmittelbar daran angrenzenden, als Schlitz ausgeführten Mündung ausgegeben wird, wobei die Längserstreckung der Schlitze die Applikationsbreite bestimmt.

2. Verfahren nach Anspruch 1, **dadurch gekennzeichnet, dass** die Temperatur des Wärmeträgers (41) bei der Applikation geringfügig unter seiner Siedetemperatur liegt.

3. Verfahren nach Anspruch 1 oder 2, **dadurch gekennzeichnet, dass** als Wärmeträger Wasser (41) oder eine Flüssigkeit auf Wasserbasis eingesetzt wird.

4. Verfahren nach einem der Ansprüche 1 bis 3, **dadurch gekennzeichnet, dass** als thermische Isolierung über den applizierten Wärmeträger (41) ein biologisch abbaubarer Schaumteppich (44) gelegt wird.

5. Verfahren nach Anspruch 4, **dadurch gekennzeichnet, dass** die thermische Isolierung (44) in demselben Arbeitsgang mit der Applikation des Wärmeträgers (41) ausgebracht wird, und zwar dergestalt, dass unmittelbar nach Applizieren des Wärmeträgers (41) die thermische Isolierung (44) aufgebracht wird.

6. Einrichtung zur thermischen Vegetationskontrolle, umfassend eine Applikationsvorrichtung (2) mit wenigstens einer Ausgabe (36) zum Ausgeben eines Wärmeträgers und mit wenigstens einer Ausgabe (37) zum Ausgeben von Schaum zum Ausbilden einer temporären thermischen Isolierung (44), wobei die Schaumausgabe (37) zu der Wärmeträgerausgabe (36) dergestalt angeordnet ist, dass in Arbeitsrichtung der Applikationsvorrichtung (2) der ausgegebene Schaum über den ausgegebenen Wärmeträger gelegt wird, **dadurch gekennzeichnet, dass** die zumindest eine Wärmeträgerausgabe (36) als Auslauf zum Auslaufenlassen des Wärmeträgers (41) in Form eines gebundenen oder zumindest weitgehend gebundenen Strahls und damit in nicht disseminierter Form oder im Wesentlichen in nicht disseminierter Form als Flüssigkeit mit einer als Schlitz ausgeführten Mündung ausgeführt ist, wobei die Applikationsflüssigkeit aus der Wärmeträgerausgabe (36) drucklos oder im Wesentlichen drucklos austritt, dass dieser Auslauf an eine Flüssigkeit beaufschlagbare Leitung angeschlossen ist und dass die Einrichtung (1) über eine Heizeinrichtung (11), konzipiert als Durchlauferhitzer verfügt, in deren Auslaufleitung eine Ventileinheit (13) mit einem Temperatursensor (14) eingeschaltet ist, welche Ventileinheit (13) über zwei Ausgänge (15, 15.1) verfügt, wobei der eine Ausgang (15) über eine Rückflussleitung (17) mit einem Wasserbehälter (6) verbunden ist und der andere Ausgang (15.1) an die Applikationsvorrichtung (2) angeschlossen ist, welche Schaumausgabe (37) als Schlitz ausgeführt ist und unmittelbar an die Wärmeträgerausgabe (36) grenzt, wobei die Längserstreckung der Schlitze die Applikationsbreite der Applikationsvorrichtung (2) bestimmt.

7. Einrichtung nach Anspruch 6, **dadurch gekennzeichnet, dass** die Wärmeträgerausgabe (36) an die Ablaufleitung einer Heizeinrichtung (11) zum Erwärmen der Applikationsflüssigkeit auf die Applikationstemperatur angeschlossen ist.

8. Einrichtung nach Anspruch 7, **dadurch gekennzeichnet, dass** die Heinzeinrichtung einen Brenner (10) aufweist.

9. Einrichtung nach einem der Ansprüche 6 bis 8, **dadurch gekennzeichnet, dass** die Applikationsvorrichtung (2) mit einem Schaummittel und mit Druckluft beaufschlagt ist und die Druckluft zum Aufschäumen des Schaummittels in eine das Schaummittel führende Leitung (31) innerhalb der Applikationsvorrichtung (2) mündet.

10. Einrichtung nach Anspruch 9, **dadurch gekennzeichnet, dass** die Wärmeträgerleitung zum Zuführen des flüssigen Wärmeträgers an die Applikationsvorrichtung (2) und die das Schaummittel zuführende Leitung als Doppelleitung ausgeführt sind.

11. Einrichtung nach einem der Ansprüche 6 bis 10, **dadurch gekennzeichnet, dass** die Applikationsvorrichtung (2) als Applikationslanze konzipiert ist.

## Claims

1. Thermal vegetation control method for vegetation control of plants growing in water-permeable soil layers, in which a liquid medium (41) heated for the purpose of the procedure is applied as a heat carrier to the vegetation (40) to be controlled, **characterised in that** the heat carrier is applied as a liquid (41) in the form of a coherent or at least largely coherent stream and thus in a non-disseminated or substantially non-disseminated form from an application device (2) with an orifice formed as a slot, flowing out unpressurized or substantially unpressurized, such that at least a part of the heated heat carrier (41) penetrates into the soil layer, wherein the heat carrier (41) applied is covered with a temporary thermal insulation which is formed as a foam blanket and is dispensed from another orifice directly adjacent thereto and formed as a slot, whereas the longitudinal extend of the slots determines the width of the application.

2. Method according to claim 1, **characterised in that** the temperature of the heat carrier (41) during the application is slightly below its boiling point.

3. Method according to claim 1 or 2, **characterised in that** the heat carrier is water (41) or a water based liquid.

4. Method according to any one of claims 1 to 3, **characterised in that**, a biologically degradable foam carpet (44) is laid over the applied heat carrier (41) as thermal insulation.

5. Method according to claim 4, **characterised in that** the thermal insulation (44) is applied in the same working sequence as the application of the heat carrier (41), and specifically in such a way that the thermal insulation (44) is applied immediately after the application of the heat carrier (41).

6. Device for thermal vegetation control, comprising an application device (2) with at least one outlet (36) for dispensing a heat carrier and with at least one outlet for dispensing foam for the formation of a temporary thermal insulation (44), wherein the foam outlet (37) is arranged in relation to the heat carrier outlet (36) in such a way that the foam dispensed in the working direction of the application device (2) is laid over the dispensed heat carrier, **characterised in that** the at least one heat carrier outlet (36) is designed as a discharge port for allowing the heat carrier (41) to flow out in the form of a coherent or at least largely coherent stream, and therefore in non-disseminated form or substantially non-disseminated form as a liquid with an orifice formed as a slot, wherein the application liquid emerges from the heat carrier outlet (36) unpressurized or substantially unpressurized, that this outlet is connected to a pipe to which liquid can be supplied, and that the device (1) is provided with a heating device (11), designed as an instantaneous heater, in the outlet pipe of which a valve unit (13) is integrated, with a temperature sensor (14), said valve unit (13) having two outlets (15, 15.1), wherein the one outlet (15) is connected via a return flow pipe (17) to a water container (6) and the other outlet (15.1) is connected to the application device (2), which foam outlet (37) is formed as a slot and borders directly to the heat carrier outlet (36), whereas the longitudinal extension of the slots define the width of application of the application device (2).

7. Device according to claim 6, **characterised in that** the heat carrier outlet (36) is connected to the outlet pipe of a heating device (11) for heating the application liquid to the application temperature.

8. Device according to claim 7, **characterised in that** the heating device comprises a burner (10).

9. Device according to any one of claims 6 to 8, **characterised in that** the application device (2) is supplied with a foam agent and with compressed air, and the compressed air for foaming the foam agent opens into a pipe (31) conducting the foam agent inside the application device (2).

10. Device according to claim 9, **characterised in that** the heat carrier pipe for conducting the liquid heat carrier to the application device (2) and the pipe conducting the foam agent are designed as double pipes.

11. Device according to any one of claims 6 to 10, **characterised in that** the application device (2) is designed as an application lance.

## Revendications

1. Procédé de contrôle thermique de la végétation destiné à contrôler la végétation de plantes qui poussent dans des couches de sol perméables à l'eau, lors duquel un médium (41) fluide réchauffé pour remplir les objectifs du procédé, faisant office de caloporteur, est appliqué sur la végétation (40) à contrôler, **caractérisé en ce que** le caloporteur est appliqué en tant que liquide (41) sous la forme d'un jet concentré ou du moins largement concentré et donc non disséminé ou du moins sensiblement non disséminé en s'écoulant sans pression ou sensiblement sans pression d'un dispositif d'application (2) avec une embouchure conformée en tant que fente, afin qu'au moins une partie du caloporteur (41) réchauffé pénètre dans les couches de sol, le caloporteur (41) appliqué étant recouvert d'une isolation thermique temporaire, laquelle est conformée en tapis en mousse, et qui est distribuée à partir d'une autre embouchure conformée en tant que fente directement voisine de celle-là, l'étendue longitudinale des fentes déterminant la largeur d'application.

2. Procédé selon la revendication 1, **caractérisé en ce que** la température du caloporteur (41) se situe, lors de l'application, très faiblement sous sa température d'ébullition.

3. Procédé selon la revendication 1 ou 2, **caractérisé en ce que** de l'eau (41) ou un liquide à base aqueuse est utilisé en tant que caloporteur.

4. Procédé selon l'une des revendications 1 à 3, **caractérisé en ce qu'**un tapis en mousse (44) biodégradable, faisant office d'isolation thermique, est posé sur le caloporteur (41) appliqué.

5. Procédé selon la revendication 4, **caractérisé en ce que** l'isolation (44) thermique est mise en place au cours de la même étape de travail que l'application du caloporteur (41) et de telle sorte que l'isolation (44) thermique est mise en place tout de suite après application du caloporteur (41).

6. Dispositif de contrôle thermique de la végétation comprenant un équipement d'application (2) avec au moins un distributeur (36) afin de distribuer le caloporteur et avec au moins un distributeur (37) afin de distribuer de la mousse pour former une isolation (44) thermique temporaire, le distributeur (37) de mousse étant disposé par rapport au distributeur (36) de caloporteur de telle sorte que, dans le sens de travail du dispositif d'application (2), la mousse distribuée est déposée sur le caloporteur distribué, **caractérisé en ce que** l'au moins un distributeur (36) de caloporteur est conformé en tant qu'écoulement, avec une embouchure en forme de fente, destiné à laisser s'écouler le caloporteur (41) en tant que liquide sous la forme d'un jet concentré ou au moins sensiblement concentré et donc pas disséminé ou au moins sensiblement non disséminé, le liquide appliqué s'écoulant du distributeur (36) de caloporteur sans pression ou sensiblement sans pression, que cet écoulement est raccordé à un conduit dans lequel peut circuler un liquide et que le dispositif (1) dispose d'un dispositif de chauffage (11) conçu en tant que chauffe-eau instantané, dans lequel conduit d'écoulement est intégrée une unité à vanne (13) avec une sonde de température (14), laquelle unité à vanne (13) dispose de deux sorties (15, 15.1), l'une des sorties (15) étant raccordée par un conduit de retour (17) à un réservoir d'eau (6) et l'autre sortie (15.1) étant raccordée au dispositif d'application (2), lequel distributeur (37) de mousse étant conformé en fente et avoisine directement le distributeur (36) de caloporteur, l'étendue longitudinale des fentes déterminant la largeur d'application du dispositif d'application (2).

7. Dispositif selon la revendication 6, **caractérisé en ce que** le distributeur (36) de caloporteur est raccordé au conduit d'écoulement d'un dispositif de chauffage (11) afin de réchauffer le liquide appliqué pour qu'il atteigne la température d'application.

8. Dispositif selon la revendication 7, **caractérisé en ce que** le dispositif de chauffage comporte un brûleur (10).

9. Dispositif selon l'une des revendications 6 à 8, **caractérisé en ce que** le dispositif d'application (2) est alimenté en agent de moussage et en air comprimé et que l'air comprimé destiné à faire mousser l'agent de moussage débouche dans un conduit (31) acheminant l'agent de moussage, situé à l'intérieur du dispositif d'application (2).

10. Dispositif selon la revendication 9, **caractérisé en ce que** le conduit du caloporteur destiné à acheminer le caloporteur liquide jusqu'au dispositif d'application (2) et le conduit acheminant l'agent moussant sont conformés en tant que conduits doubles.

11. Dispositif selon l'une des revendications 6 à 10, **caractérisé en ce que** le dispositif d'application (2) est conçu en tant que lance d'application.
